(19) Europäisches Patentamt
European Patent Office
Office européen des brevets

(11) **EP 4 506 662 A1**

(12) **EUROPEAN PATENT APPLICATION**
published in accordance with Art. 153(4) EPC

(43) Date of publication:
**12.02.2025 Bulletin 2025/07**

(21) Application number: **23884548.1**

(22) Date of filing: **09.10.2023**

(51) International Patent Classification (IPC):
**G01C 21/00** (2006.01)    **G06T 7/70** (2017.01)

(52) Cooperative Patent Classification (CPC):
**G01C 21/00; G06T 7/70; G06V 10/764**

(86) International application number:
**PCT/CN2023/123470**

(87) International publication number:
**WO 2024/093616 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.11.2022 CN 202211372702**

(71) Applicant: **Dongfeng Commercial Vehicle Co., Ltd.**
**Shiyan, Hubei 442001 (CN)**

(72) Inventors:
• **YAN, Minghui**
  Shiyan, Hubei 442001 (CN)
• **LIU, Jingsong**
  Shiyan, Hubei 442001 (CN)
• **YANG, Chun**
  Shiyan, Hubei 442001 (CN)
• **YU, Wenyan**
  Shiyan, Hubei 442001 (CN)
• **SUN, Quan**
  Shiyan, Hubei 442001 (CN)

(74) Representative: **Lohmanns Lohmanns & Partner mbB**
**Benrather Schlossallee 49-53**
**40597 Düsseldorf (DE)**

(54) **UNMANNED DRAYAGE TRUCK ALIGNMENT METHOD, APPARATUS, AND DEVICE, AND READABLE STORAGE MEDIUM**

(57) The present invention provides an unmanned drayage truck alignment method, apparatus, and device, and a readable storage medium. The unmanned drayage truck alignment method comprises: on the basis of positioning information of a target position, controlling an unmanned drayage truck to perform alignment; acquiring alignment information of the unmanned drayage truck; on the basis of the alignment information of the unmanned drayage truck, determining whether the unmanned drayage truck is successfully aligned; if yes, outputting prompt information to prompt port machinery equipment to carry out container loading/unloading operation; and if not, adjusting the position of the unmanned drayage truck on the basis of the alignment information, and returning to the step of acquiring alignment information of the unmanned drayage truck. The present invention can solve the problems of low efficiency and potential safety hazards of manual alignment and parking of manned drayage trucks under port machinery equipment, and on the basis, ensures the alignment accuracy and the safety reliability of unmanned drayage trucks, thereby making the overall interaction operation between unmanned drayage trucks and port machinery equipment safer and more efficient.

Fig. 2

Flowchart:
- controlling an unmanned drayage truck to perform alignment based on positioning information of a target position — S10
- acquiring alignment information of the unmanned drayage truck — S20
- determining whether the unmanned drayage truck is successfully aligned based on the alignment information of the unmanned drayage truck — S30
- if not, adjusting the position of the unmanned drayage truck based on the alignment information, and returning to the step of acquiring alignment information of the unmanned drayage truck — S50
- if yes, outputting prompt information to prompt port machinery equipment to perform container loading/unloading operation — S40

## Description

### Field of the Invention

The present invention relates to the field of unmanned drayage truck control in smart ports, and in particular to an unmanned drayage truck alignment method, apparatus, and device, and a readable storage medium.

### Background of the Invention

At present, ports mostly use manned drayage trucks to transport containers to complete loading operations, wherein when precise parking is required under port machinery equipment or in the yard operation area, drivers need to manually align and park according to the parking rods placed manually under the port machinery equipment, so as to facilitate the subsequent completion of container lifting and placing operations by the port machinery equipment. The method of using manned drayage trucks for alignment and parking mentioned above poses safety hazards to drivers and guiding personnel under the port machinery equipment, and is inefficient with high labor costs.

### Summary of the Invention

The main purpose of the present invention is to provide an unmanned drayage truck alignment method, apparatus, and device, and a readable storage medium, aiming to solve the technical problem in the prior art that when manned drayage trucks are used for alignment and parking, manual alignment is required, which is inefficient and poses safety hazards.

In a first aspect, the present invention provides an unmanned drayage truck alignment method, comprising the following steps:

controlling an unmanned drayage truck to perform alignment based on positioning information of a target position;

acquiring alignment information of the unmanned drayage truck;

determining whether the unmanned drayage truck is successfully aligned based on the alignment information of the unmanned drayage truck;

if yes, outputting prompt information to prompt port machinery equipment to perform container loading/unloading operation; and

if not, adjusting the position of the unmanned drayage truck based on the alignment information, and returning to the step of acquiring alignment information of the unmanned drayage truck.

Optionally, before the step of acquiring alignment information of the unmanned drayage truck, it comprises the following steps:

acquiring an image of the unmanned drayage truck collected by a camera on the port machinery equipment;

acquiring a front of the unmanned drayage truck and four sides of a limiting subframe by identifying based on the image;

marking four vertex coordinates corresponding to the four sides of the limiting subframe in an image coordinate system, and converting the four vertex coordinates into four corresponding target coordinates in a world coordinate system based on a SLAM algorithm;

determining a first distance difference between the unmanned drayage truck and the target position based on the four target coordinates; and

acquiring an attitude angle value of the unmanned drayage truck relative to the target position by calculation based on the two target coordinates corresponding to the front of the unmanned drayage truck in the four target coordinates.

Optionally, before the step of acquiring alignment information of the unmanned drayage truck, it comprises the following steps:

acquiring test data, and constructing an error correction model based on the test data, wherein the test data is a plurality of sets of first test distance difference values and corresponding second test distance difference values between the unmanned drayage truck and the target position collected at a preset frequency, wherein the first test distance difference values are acquired by identifying the image of the unmanned drayage truck collected by the camera on the port machinery equipment, and the second test distance difference values are acquired by calculating based on the positioning information of the unmanned drayage truck and the target position;

determining a distance adjustment ratio based on the error correction model; and

determining a second distance difference between the unmanned drayage truck and the target location based on the first distance difference and the distance adjustment ratio.

Optionally, the step of constructing an error correction model based on the test data comprises:

acquiring ratios of a plurality of sets of the first test distance difference values to the corresponding second test distance difference values by calculation;

determining the number of sets corresponding to the ratios in different numerical ranges; and

based on the ratios of the different numerical ranges and the numbers of sets corresponding to the ratios of the different numerical ranges, acquiring a normal distribution curve by fitting, and acquiring the error correction model by constructing based on the normal distribution curve.

Optionally, the step of adjusting the position of the unmanned drayage truck based on the alignment information comprises:

determining a target driving direction and a target driving distance of the unmanned drayage truck based on the second distance difference;

determining a target rotation direction and a target rotation angle of the unmanned drayage truck based on the attitude angle value; and

controlling the unmanned drayage truck to rotate the target rotation angle along the target rotation direction, and to travel the target driving distance along the target driving direction.

Optionally, before the step of adjusting the position of the unmanned drayage truck based on the alignment information, the method further comprises:

acquiring three-dimensional point cloud information of an obstacle;

determining whether the unmanned drayage truck will collide with the obstacle based on an adjustment trajectory of the unmanned drayage truck; and

if a collision occurs, pausing the adjustment of the position of the unmanned drayage truck, and waiting on a spot or avoiding the obstacle.

In a second aspect, the present invention provides an unmanned drayage truck alignment apparatus, comprising:

an alignment module, which is configured to control an unmanned drayage truck to perform alignment based on positioning information of a target position;

an acquisition module, which is configured to acquire alignment information of the unmanned drayage truck;

a determination module, which is configured to determine whether the unmanned drayage truck is successfully aligned based on the alignment information of the unmanned drayage truck;

a prompt module, which is configured to output prompt information if the alignment is successful so as to prompt port machinery equipment to perform container loading/unloading operation; and

an adjustment module, which is configured to adjust the position of the unmanned drayage truck based on the alignment information if the alignment is not successful, and return to the step of acquiring alignment information of the unmanned drayage truck.

Optionally, the unmanned drayage truck alignment apparatus further comprises a computing module, which is configured to:

acquire an image of an unmanned drayage truck collected by a camera on the port machinery equipment;

acquire a front of the unmanned drayage truck and four sides of a limiting subframe by identifying based on the image;

mark four vertex coordinates corresponding to the four sides of the limiting subframe in an image coordinate system, and convert the four vertex coordinates into four corresponding target coordinates in a world coordinate system based on a SLAM algorithm;

determine a first distance difference between the unmanned drayage truck and the target position based on the four target coordinates; and

acquire an attitude angle value of the unmanned drayage truck relative to the target position by calculation based on the two target coordinates corresponding to the front of the unmanned drayage truck in the four target coordinates.

Optionally, the unmanned drayage truck alignment apparatus further comprises an error correction module, which is configured to:

acquire test data, and construct an error correction model based on the test data, wherein the test data is a plurality of sets of first test distance difference values and corresponding second test distance difference values between the unmanned drayage truck and the target position collected at a preset frequency, wherein the first test distance difference values are acquired by identifying the image of the unmanned drayage truck collected by the camera on the port machinery equipment, and the second test distance difference values are acquired by calculating based on the positioning information of the unmanned drayage truck and the target position;

determine a distance adjustment ratio based on the error correction model; and

determine a second distance difference between the unmanned drayage truck and the target location based on the first distance difference and the distance adjustment ratio.

Optionally, the error correction module is further specifically configured to:

acquire ratios of a plurality of sets of the first test distance difference values to the corresponding second test distance difference values by calculation;

determine the number of sets corresponding to the ratios in different numerical ranges; and

based on the ratios of the different numerical ranges and the numbers of sets corresponding to the ratios of the different numerical ranges, acquire a normal distribution curve by fitting, and acquire the error correction model by constructing based on the normal distribution curve.

Optionally, the adjustment module is further specifically configured to:

determine a target driving direction and a target driving distance of the unmanned drayage truck based on the second distance difference;

determine a target rotation direction and a target rotation angle of the unmanned drayage truck based on the attitude angle value; and

control the unmanned drayage truck to rotate the target rotation angle along the target rotation direction, and to travel the target driving distance along the target driving direction.

Optionally, the unmanned drayage truck alignment apparatus further comprises an obstacle warning module, which is configured to:

acquire three-dimensional point cloud information of an obstacle;

determine whether the unmanned drayage truck will collide with the obstacle based on an adjustment trajectory of the unmanned drayage truck; and

if a collision occurs, pause the adjustment of the position of the unmanned drayage truck, and wait on a spot or avoiding the obstacle.

In a third aspect, the present invention further provides an unmanned drayage truck alignment device, the unmanned drayage truck alignment device comprises a processor, a memory, and an unmanned drayage truck alignment program stored on the memory and executable by the processor, wherein when the unmanned drayage truck alignment program is executed by the processor, the steps of the above-mentioned unmanned drayage truck alignment method are realized.

In a fourth aspect, the present invention further provides a readable storage medium, an unmanned drayage truck alignment program is stored on the readable storage medium, wherein when the unmanned drayage truck alignment program is executed by a processor, the steps of the above-mentioned unmanned drayage truck alignment method are realized.

The present invention provides an unmanned drayage truck alignment method, apparatus, and device, and a readable storage medium, the unmanned drayage truck alignment method comprises the steps of controlling an unmanned drayage truck to perform alignment based on positioning information of a target position; acquiring alignment information of the unmanned drayage truck; determining whether the unmanned drayage truck is successfully aligned based on the alignment information of the unmanned drayage truck; if yes, outputting prompt information to prompt port machinery equipment to perform container loading/unloading operation; and if not, adjusting the position of the unmanned drayage truck based on the alignment information, and returning to the step of acquiring alignment information of the unmanned drayage truck. The present invention can solve the problems of low efficiency and potential safety hazards of manual alignment and parking of manned drayage trucks under the port machinery equipment, and on the basis, ensures the alignment accuracy and the safety reliability of unmanned drayage trucks, thereby making the overall interaction operation between the unmanned drayage trucks and the port machinery equipment safer and more efficient.

**Brief Description of the Drawings**

Fig. 1 is a hardware structure diagram of an unmanned drayage truck alignment device involved in the embodiment of the present invention;

Fig. 2 is a flowchart of an embodiment of an unmanned drayage truck alignment method in the present invention;

Fig. 3 is a flowchart of another embodiment of an unmanned drayage truck alignment method in the present invention;

Fig. 4 is a flowchart of a further embodiment of an unmanned drayage truck alignment method in the present invention;

Fig. 5 is a schematic diagram of a functional module of an embodiment of an unmanned drayage truck alignment apparatus in the present invention.

The realization of purposes, functional characteristics and advantages of the present invention will be further described with reference to the drawings in combination with the embodiments.

**Detailed Description of the Embodiments**

It should be understood that the specific embodiments described herein are only for explaining the present invention and are not intended to limit the present invention.

In a first aspect, the embodiment of the present invention provides an unmanned drayage truck alignment device.

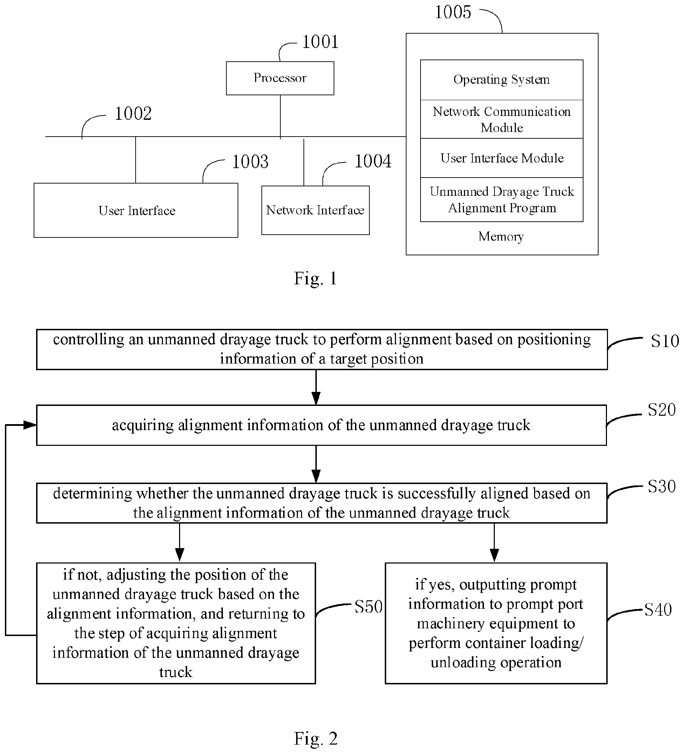

As shown in Fig. 1, Fig. 1 is a hardware structure diagram of an unmanned drayage truck alignment device involved in the embodiment of the present invention. In this embodiment of the present invention, the unmanned drayage truck alignment device can comprise a processor 1001 (for example, a central processing unit (CPU)), a communication bus 1002, a user interface 1003, a network interface 1004, and a memory 1005. The communication bus 1002 is configured to realize the connection communication between these components. The user interface 1003 can comprise a display and an input unit such as a keyboard. The network interface 1004 can optionally comprise a standard wired interface and a wireless interface (such as a wireless-fidelity (WI-FI) interface). The memory 1005 can be a high-speed random-access memory (RAM) or a non-volatile memory, such as a disk memory. The memory 1005 can optionally further be a storage device independent of the aforementioned processor 1001. Those skilled in the art can understand that the hardware structure shown in Fig. 1 does not constitute a limitation of the present invention, and can comprise more or less components than those shown in Fig. 1, or combine some components, or arrange different components.

Continuing to refer to Fig. 1, the memory 1005 as a computer storage medium in Fig. 1 can comprise an operating system, a network communication module, a user interface module, and an unmanned drayage truck alignment program. The processor 1001 can call the unmanned drayage truck alignment program stored in the memory 1005, and execute the unmanned drayage truck alignment method provided by the embodiment of the present invention.

In a second aspect, the embodiment of the present invention provides an unmanned drayage truck alignment method.

As shown in Fig. 2, Fig. 2 is a flowchart of an embodiment of an unmanned drayage truck alignment method in the present invention.

In an embodiment of the unmanned drayage truck alignment method of the present invention, the unmanned drayage truck alignment method comprises the steps of:

S10: controlling an unmanned drayage truck to perform alignment based on positioning information of a target position;

S20: acquiring alignment information of the unmanned drayage truck;

S30: determining whether the unmanned drayage truck is successfully aligned based on the alignment information of the unmanned drayage truck;

S40: if yes, outputting prompt information to prompt port machinery equipment to perform container loading/unloading operation; and

S50: if not, adjusting the position of the unmanned drayage truck based on the alignment information, and returning to the step of acquiring alignment information of the unmanned drayage truck.

In this embodiment, unmanned drayage trucks are used for automatic driving alignment so as to solve the problem in the prior art that when manned drayage trucks are used for alignment and parking, manual alignment is required, which is inefficient and poses safety hazards. During the autonomous driving alignment process of the unmanned drayage truck, the target position corresponding to the high-precision positioning system and the positioning information of the unmanned drayage truck are first aligned. However, in the actual operation process of the unmanned drayage truck performing alignment and parking based on positioning information, there are problems such as alignment accuracy and safety and reliability, which will lead to insufficient alignment success rate. For example: (1) due to the large metal covering area of the bridge structure, such as port machinery equipment (quay crane, gantry crane, stacker), the positioning signal of the unmanned drayage truck under the bridge may become unstable, leading to potential error reporting by the unmanned drayage truck, which may then wait in place for the positioning signal to recover; (2) if the difference between the accuracy of the positioning signal and the latitude and longitude of the destination is greater than the preset difference (such as 5cm), the unmanned drayage truck may need to make another round for repositioning, this repeated positioning can greatly affect operational efficiency and may cause congestion; and (3) in the case where the positioning signal is lost and no electronic fence is set in the intelligent system map of the vehicle, there is a risk of the vehicle on the quay bridge plunging into the sea.

Therefore, in this embodiment, based on the positioning information of the high-precision positioning system for alignment, the alignment information of the unmanned drayage truck will be acquired in real time. Whether the unmanned drayage truck is successfully aligned is determined based on the judgment of the above alignment information. When it is determined that the alignment is successful, a prompt information can be output, such as controlling the green light above the lifting gear of the port machinery equipment, thereby indicating that the port machinery operator can perform the grabbing/releasing of containers, that is, prompting the port machinery equipment to perform the loading/unloading of containers. When it is determined that the unmanned drayage truck has not been successfully aligned, the position of the unmanned drayage truck can be adjusted based on the alignment information. At the same time or after the adjustment is completed, the step of acquiring the alignment information of the unmanned drayage truck is returned until the unmanned drayage truck is aligned successfully. The above-mentioned method of determining the alignment result based on positioning information and alignment information can solve the problem of low efficiency and potential safety hazards of manual alignment and parking of manned drayage trucks under port machinery equipment, and on the basis, ensures the alignment accuracy and the safety reliability of unmanned drayage trucks.

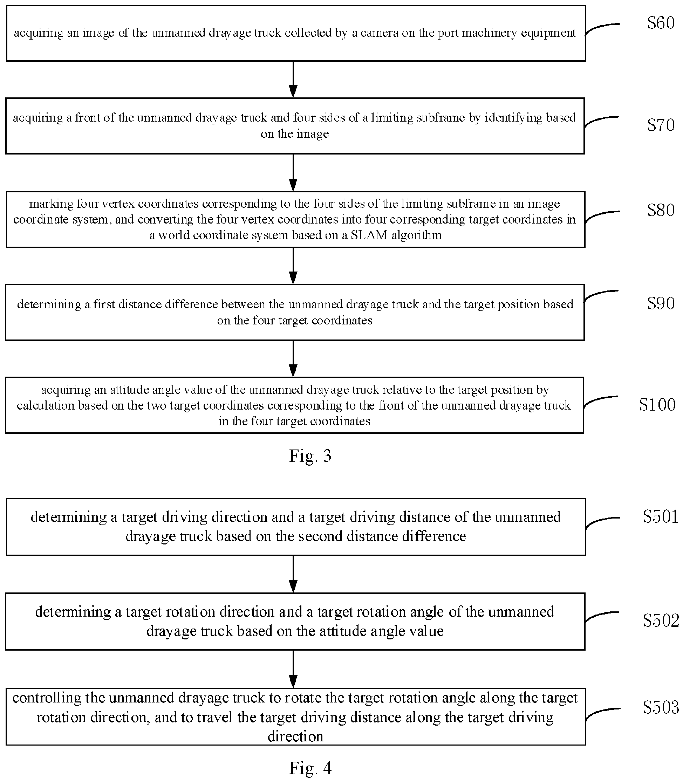

Further, in one embodiment, as shown in Fig. 3, the steps before S20 comprise:

S60: acquiring an image of the unmanned drayage truck collected by a camera on the port machinery equipment;

S70: acquiring a front of the unmanned drayage truck and four sides of a limiting subframe by identifying based on the image;

S80: marking four vertex coordinates corresponding to the four sides of the limiting subframe in an image coordinate system, and converting the four vertex coordinates into four corresponding target coordinates in a world coordinate system based on a SLAM algorithm;

S90: determining a first distance difference between the unmanned drayage truck and the target position based on the four target coordinates; and

S 100: acquiring an attitude angle value of the unmanned drayage truck relative to the target position by calculation based on the two target coordinates corresponding to the front of the unmanned drayage truck in the four target coordinates.

In this embodiment, before the unmanned drayage truck acquires the alignment information, it is necessary to collect the alignment information based on the port intelligent alignment system iCPS, etc. The alignment information collected by the iCPS can establish a camera-specific image coordinate system based on the camera video information on the lifting gear of the port machinery equipment. The camera on the lifting gear of the port machinery equipment collects images of the unmanned drayage truck in real time to capture and identify the boundary coordinates of the unmanned drayage truck in the collected images. The unmanned drayage truck boundary that needs to be identified comprises the front of the unmanned drayage truck and the four sides of the limiting subframe. At this time, the four vertex coordinates $(X1, Y1), (X2, Y2), (X3, Y3),$ and $(X4, Y4)$ corresponding to the four sides of the limiting subframe in the image coordinate system can be marked, and based on the SLAM algorithm, the four vertex coordinates can be converted into the corresponding four target coordinates $(XG1, YG1), (XG2, YG2), (XG3, YG3),$ and $(XG4, YG4)$ in the world coordinate system.

Based on the above four target coordinates, the first distance difference between the unmanned drayage truck and the target position can be determined. The above first distance difference represents the deviation from the precise operation center position that the drayage truck needs to reach, wherein a positive value indicates the forward distance and a negative value indicates the backward distance, with units in millimeters (mm). Based on the two target coordinates $(XG1, YG1)$ and $(XG2, YG2)$ corresponding to the front of the unmanned drayage truck among the four target coordinates, the attitude angle value $\theta$ of the unmanned drayage truck relative to the target position can be calculated, wherein tan

$$\theta = \frac{|X_{G1} - X_{G2}|}{|Y_{G1} - Y_{G2}|}$$ 

wherein the above attitude angle value is in the same coordinate system as the lifting gear attitude, with units in 0.1 degrees. The above first distance difference and attitude angle value are both the alignment information of the unmanned drayage truck, and the above alignment information will be pushed by the iCPS to the VMS vehicle management platform, and the VMS vehicle management platform will then push the above positioning information to the corresponding unmanned drayage truck end OBU.

Further, in one embodiment, the steps before S20 comprise:

acquiring test data, and constructing an error correction model based on the test data, wherein the test data is a plurality of sets of first test distance difference values and corresponding second test distance difference values between the unmanned drayage truck and the target position collected at a preset frequency, wherein the first test distance difference values are acquired by identifying the image of the unmanned drayage truck collected by the camera on the port machinery equipment, and the second test distance difference values are acquired by calculating based on the positioning information of the unmanned drayage truck and the target position;

determining a distance adjustment ratio based on the error correction model; and

determining a second distance difference between the unmanned drayage truck and the target location based on the first distance difference and the distance adjustment ratio.

In this embodiment, when the unmanned drayage truck approaches the loading and unloading point during the alignment process, the iCPS will report the distance L between the unmanned drayage truck and the target location at a fixed frequency, such as a frequency of 1 Hz. There will be a certain deviation between the value of L and the actual distance D between the unmanned drayage truck and the target location. Considering that the alignment adjustment process of the unmanned drayage truck needs to ensure the accuracy of alignment information, if the deviation is too large, the unmanned drayage truck will repeatedly perform alignment adjustment until the alignment is successful, which will result in extremely low efficiency. Therefore, it is necessary to control this deviation within a certain allowable range to acquire more accurate alignment information, thereby improving alignment efficiency.

Therefore, in this embodiment, in order to correct the above deviation, the unmanned drayage truck at the port is tested, and the test data L and D under each use case are collected at a frequency of seconds. The collected test data are a plurality of sets of first test distance difference values and corresponding second test distance difference values between the unmanned drayage truck and the target position collected at a preset frequency, wherein the first test distance difference values are acquired by identifying the image of the unmanned drayage truck collected by the camera on the port machinery equipment, and the second test distance difference values are acquired by calculating based on the positioning information of the unmanned drayage truck and the target position.

After the test data is collected, an error correction model can be constructed based on the test data. In subsequent actual operation, the distance adjustment ratio can be determined based on the above error correction model, and the above distance adjustment ratio corresponds to the positive error between two test distances L and D of the unmanned drayage truck relative to the target position. After acquiring the distance adjustment ratio, the second distance difference between the unmanned drayage truck and the target location can be further determined based on the first distance difference and the distance adjustment ratio. For example, if the distance adjustment ratio is 0.5%-0.7%, and the first distance difference is $L_0$, then the second distance difference can be further acquired as $L_0*(1+0.6\%)$. The second distance difference is used as the distance difference between the unmanned drayage truck and the target position that needs to be referred to when the unmanned drayage truck in the alignment information performs alignment adjustment.

Further, in one embodiment, the step of constructing an error correction model based on the test data comprises:

acquiring ratios of a plurality of sets of the first test distance difference values to the corresponding second test distance difference values by calculation;

determining the number of sets corresponding to the ratios in different numerical ranges;

based on the ratios of the different numerical ranges and the numbers of sets corresponding to the ratios of the different numerical ranges, acquiring a normal distribution curve by fitting, and acquiring the error correction model by constructing based on the normal distribution curve.

In this embodiment, the step of constructing an error correction model based on the test data comprises: calculating the ratios of the above a plurality of sets of the first test distance difference values $L_0$ and the corresponding second test distance difference values $D_0$ to acquire a plurality of sets of ratios. Then, through determining how many sets (i.e., the number of sets) correspond to the ratios in different numerical ranges, all the test data for the set ratios are integrated to acquire Table 1.

Table 1

| Numerical Range | Ratio $L_0/D_0$ | Frequency |
|---|---|---|
| 1 | $L_0/D_0 < 99.992$ | 537 |
| 2 | $99.992 < L_0/D0 < 100.056$ | 852 |
| 3 | $100.056 < L_0/D_0 < 100.1201$ | 1135 |
| 4 | $100.1201 < L_0/D_0 < 100.1842$ | 998 |
| 5 | $100.1842 < L_0/D_0 < 100.2482$ | 1008 |
| 6 | $100.2482 < L_0/D_0 < 100.3123$ | 2409 |
| 7 | $100.3123 < L_0/D_0 < 100.3763$ | 4445 |
| 8 | $100.3763 < L_0/D_0 < 100.4404$ | 4939 |

(continued)

| Numerical Range | Ratio $L_0/D_0$ | Frequency |
| --- | --- | --- |
| 9 | $100.4404 < L_0/D_0 < 100.5044$ | 6996 |
| 10 | $100.5044 < L_0/D_0 < 100.5685$ | 17058 |
| 11 | $100.5685 < L_0/D_0 < 100.6325$ | 19953 |
| 12 | $100.6325 < L_0/D_0 < 100.6966$ | 17248 |
| 13 | $100.6966 < L_0/D_0 < 100.7606$ | 7884 |
| 14 | $100.7606 < L_0/D_0 < 100.8247$ | 4235 |
| 15 | $100.8247 < Lo/Do < 100.8887$ | 4370 |
| 16 | $100.8887 < L_0/D_0 < 100.9528$ | 2476 |
| 17 | $100.9528 < L_0/D0 < 101.0168$ | 956 |
| 18 | $101.0168 < L_0/D0 < 101.0809$ | 1122 |
| 19 | $101.0809 < L_0/D_0 < 101.1449$ | 944 |
| 20 | $101.1449 < L_0/D_0 < 101.209$ | 972 |

Based on the above test data, a normal distribution curve is acquired by curve algorithm fitting. The error correction model can be constructed corresponding to the normal distribution curve acquired by fitting. Through the above error correction model, it can be determined how much the ratio of $L_0/D_0$ is concentrated in a certain numerical range, such as concentrated between 100.5 and 100.7, that is, the actual distance between the unmanned drayage truck and the target position has a positive error of 0.5% to 0.7% relative to the distance monitored by the iCPS, that is, when the iCPS outputs the alignment information of the distance difference between the unmanned drayage truck and the target position, a correction value of 0.6% can be added.

The above error correction model is acquired based on simulation, which can also be acquired through collecting more dimensional parameters, such as test data at various distances (within 10dm, 10-40dm, 40-80dm, 80-100dm, etc.) in various scenarios (rainy days, sunny days, snowy days, etc.) for group fitting to acquire a more accurate error adjustment model that adapts to more scenarios, thereby acquiring the alignment information with higher prediction accuracy.

Further, in one embodiment, as shown in Fig. 4, the step of adjusting the position of the unmanned drayage truck based on the alignment information comprises:

S501: determining a target driving direction and a target driving distance of the unmanned drayage truck based on the second distance difference;

S502: determining a target rotation direction and a target rotation angle of the unmanned drayage truck based on the attitude angle value; and

S503: controlling the unmanned drayage truck to rotate the target rotation angle along the target rotation direction, and to travel the target driving distance along the target driving direction.

In this embodiment, after the alignment information of the iCPS is acquired through the above method, since the alignment information is already very accurate, the position of the unmanned drayage truck can be adjusted based on the relatively accurate alignment information. Specifically, the alignment information comprises a second distance difference and an attitude angle value, and the target driving direction and target driving distance of the unmanned drayage truck can be determined through the second distance difference; and the target rotation direction and target rotation angle of the unmanned drayage truck can be determined through the attitude angle value. After acquiring the above control parameters, the unmanned drayage truck is controlled to rotate the target rotation angle along the target rotation direction, and to travel the target driving distance along the target driving direction. Since the above alignment information is relatively accurate, the alignment adjustment can be completed efficiently and accurately at this time.

Further, in one embodiment, before the step of adjusting the position of the unmanned drayage truck based on the alignment information, it further comprises the following steps:

acquiring three-dimensional point cloud information of an obstacle;

determining whether the unmanned drayage truck will collide with the obstacle based on an adjustment trajectory of the unmanned drayage truck; and

if a collision occurs, pausing the adjustment of the position of the unmanned drayage truck, and waiting on a spot or avoiding the obstacle.

In this embodiment, since the alignment adjustment of the unmanned drayage truck is a type of remote-control command, usually in this case the automatic driving system of the unmanned drayage truck will directly execute the stepping command of the adjustment. During the alignment adjustment process of this solution, the vehicle-side laser radar of the unmanned drayage truck will continue to work synchronously, based on the reflected signal of the obstacle combined with timestamp information, laser scanning angle, GPS location and feature information. This data is processed into a high-precision three-dimensional coordinate, thereby becoming a three-dimensional signal with distance and spatial information. Based on fusion algorithms, a three-dimensional point cloud can be established. Before adjusting the position of the unmanned drayage truck based on the alignment information, the three-dimensional point cloud information of the obstacle will be acquired, and based on the adjustment trajectory of the unmanned drayage truck, it will be determined whether there is a risk of collision with the obstacle. If there is a risk of collision, even if the adjustment instruction requires the vehicle to move forward a certain distance, the position adjustment of the unmanned drayage truck will be suspended to wait on a spot or avoid the obstacle, thereby ensuring the safety and efficiency of operations of the unmanned drayage truck.

In this embodiment, an unmanned drayage truck alignment method is provided, which comprises: controlling an unmanned drayage truck to perform alignment based on positioning information of a target position; acquiring alignment information of the unmanned drayage truck; determining whether the unmanned drayage truck is successfully aligned based on the alignment information of the unmanned drayage truck; if yes, outputting prompt information to prompt port machinery equipment to perform container loading/unloading operation; and if not, adjusting the position of the unmanned drayage truck based on the alignment information, and returning to the step of acquiring alignment information of the unmanned drayage truck. The present invention can solve the problems of low efficiency and potential safety hazards of manual alignment and parking of manned drayage trucks under the port machinery equipment, and on the basis, ensures the alignment accuracy and the safety reliability of unmanned drayage trucks, thereby making the overall interaction operation between the unmanned drayage trucks and the port machinery equipment safer and more efficient.

In a third aspect, the embodiment of the present invention provides an unmanned drayage truck alignment apparatus.

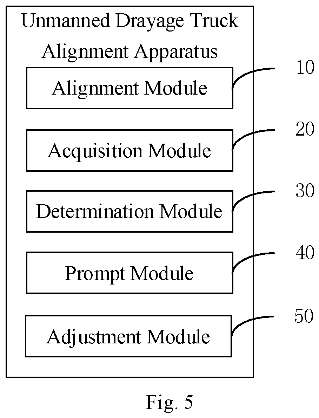

As shown in Fig. 5, Fig. 5 is a schematic diagram of a functional module of an embodiment of an unmanned drayage truck alignment apparatus.

In this embodiment, the unmanned drayage truck alignment apparatus comprises:

an alignment module 10, which is configured to control an unmanned drayage truck to perform alignment based on positioning information of a target position;

an acquisition module 20, which is configured to acquire alignment information of the unmanned drayage truck;

a determination module 30, which is configured to determine whether the unmanned drayage truck is successfully aligned based on the alignment information of the unmanned drayage truck;

a prompt module 40, which is configured to output prompt information if the alignment is successful so as to prompt port machinery equipment to perform container loading/unloading operation; and

an adjustment module 50, which is configured to adjust the position of the unmanned drayage truck based on the alignment information if the alignment is not successful, and return to the step of acquiring alignment information of the unmanned drayage truck.

Further, in one embodiment, the unmanned drayage truck alignment apparatus further comprises a computing module, which is configured to:

acquire an image of an unmanned drayage truck collected by a camera on the port machinery equipment;

acquire a front of the unmanned drayage truck and four sides of a limiting subframe by identifying based on the image;

mark four vertex coordinates corresponding to the four sides of the limiting subframe in an image coordinate system, and convert the four vertex coordinates into four corresponding target coordinates in a world coordinate system based on a SLAM algorithm;

determine a first distance difference between the unmanned drayage truck and the target position based on the four target coordinates; and

acquire an attitude angle value of the unmanned drayage truck relative to the target position by calculation based on the two target coordinates corresponding to the front of the unmanned drayage truck in the four target coordinates.

Further, in one embodiment, the unmanned drayage truck alignment apparatus further comprises an error correction module, which is configured to:

acquire test data, and construct an error correction model based on the test data, wherein the test data is a plurality of sets of first test distance difference values and corresponding second test distance difference values between the unmanned drayage truck and the target position collected at a preset frequency, wherein the first test distance difference values are acquired by identifying the image of the unmanned drayage truck collected by the camera on the port machinery equipment, and the second test distance difference values are acquired by calculating based on the positioning information of the unmanned drayage truck and the target position;

determine a distance adjustment ratio based on the error correction model; and

determine a second distance difference between the unmanned drayage truck and the target location based on the first distance difference and the distance adjustment ratio.

Further, in one embodiment, the error correction module is further specifically configured to:

acquire ratios of a plurality of sets of the first test distance difference values to the corresponding second test distance difference values by calculation;

determine the number of sets corresponding to the ratios in different numerical ranges; and

based on the ratios of the different numerical ranges and the numbers of sets corresponding to the ratios of the different numerical ranges, acquire a normal distribution curve by fitting, and acquire the error correction model by constructing based on the normal distribution curve.

Further, in one embodiment, the adjustment module 50 is further specifically configured to:

determine a target driving direction and a target driving distance of the unmanned drayage truck based on the second distance difference;

determine a target rotation direction and a target rotation angle of the unmanned drayage truck based on the attitude angle value; and

control the unmanned drayage truck to rotate the target rotation angle along the target rotation direction, and to travel the target driving distance along the target driving direction.

Further, in one embodiment, the unmanned drayage truck alignment apparatus further comprises an obstacle warning module, which is configured to:

acquire three-dimensional point cloud information of an obstacle;

determine whether the unmanned drayage truck will collide with the obstacle based on an adjustment trajectory of the unmanned drayage truck; and

if a collision occurs, pause the adjustment of the position of the unmanned drayage truck, and wait on a spot or avoiding the obstacle.

The function implementation of each module in the above unmanned drayage truck alignment apparatus corresponds to the steps in the above embodiments of the unmanned drayage truck alignment method, and the functions and implementation processes thereof will not be repeated herein.

In a fourth aspect, the embodiment of the present invention further provides a readable storage medium.

The readable storage medium of the present invention stores an unmanned drayage truck alignment program, when the unmanned drayage truck alignment program is executed by a processor, the steps of the above unmanned drayage truck alignment method are realized.

For the method implemented when the unmanned drayage truck alignment program is executed, reference may be made to the various embodiments of the unmanned drayage truck alignment method of the present invention, which will not be repeated herein.

Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or system comprising the elements.

The above-mentioned serial numbers in the embodiments of the present invention are only for description, and do not represent the advantages or disadvantages of the embodiments.

From the description of the above embodiments, those skilled in the art can clearly understand that the methods of the above embodiments can be implemented by means of software plus a necessary general hardware platform, and of course hardware can also be used, but in many cases the former is better implementation. Based on this understanding, the technical solutions of the present invention, in essence, or the parts that make contributions to the prior art, can be embodied in the form of software products. The computer software products are stored in a storage medium (such as ROM/RAM, magnetic disk, optical disk) as described above, comprising several instructions to make a terminal device execute the methods described in each embodiment of the present invention.

The above are only preferred embodiments of the present invention, and are not intended to limit the protection scope of the present invention. Any equivalent structure or equivalent process transformation made by using the contents of the description and drawings of the present invention, or directly or indirectly applied in other related technical fields, are similarly included in the protection scope of patent of the present invention.

## Claims

1. An unmanned drayage truck alignment method, comprising the following steps:

   controlling an unmanned drayage truck to perform alignment based on positioning information of a target position;
   acquiring alignment information of the unmanned drayage truck;
   determining whether the unmanned drayage truck is successfully aligned based on the alignment information of the unmanned drayage truck;
   if yes, outputting prompt information to prompt port machinery equipment to perform container loading/unloading operation; and
   if not, adjusting the position of the unmanned drayage truck based on the alignment information, and returning to the step of acquiring alignment information of the unmanned drayage truck.

2. The unmanned drayage truck alignment method according to claim 1, wherein before the step of acquiring alignment information of the unmanned drayage truck, it comprises the following steps:

   acquiring an image of the unmanned drayage truck collected by a camera on the port machinery equipment;
   acquiring a front of the unmanned drayage truck and four sides of a limiting subframe by identifying based on the image;
   marking four vertex coordinates corresponding to the four sides of the limiting subframe in an image coordinate system, and converting the four vertex coordinates into four corresponding target coordinates in a world coordinate system based on a SLAM algorithm;
   determining a first distance difference between the unmanned drayage truck and the target position based on the four target coordinates; and
   acquiring an attitude angle value of the unmanned drayage truck relative to the target position by calculation based on the two target coordinates corresponding to the front of the unmanned drayage truck in the four target coordinates.

3. The unmanned drayage truck alignment method according to claim 2, wherein before the step of acquiring alignment information of the unmanned drayage truck, it comprises the following steps:

acquiring test data, and constructing an error correction model based on the test data, wherein the test data is a plurality of sets of first test distance difference values and corresponding second test distance difference values between the unmanned drayage truck and the target position collected at a preset frequency, wherein the first test distance difference values are acquired by identifying the image of the unmanned drayage truck collected by the camera on the port machinery equipment, and the second test distance difference values are acquired by calculating based on the positioning information of the unmanned drayage truck and the target position; determining a distance adjustment ratio based on the error correction model; and determining a second distance difference between the unmanned drayage truck and the target location based on the first distance difference and the distance adjustment ratio.

4. The unmanned drayage truck alignment method according to claim 3, wherein the step of constructing an error correction model based on the test data comprises the following steps:

acquiring ratios of a plurality of sets of the first test distance difference values to the corresponding second test distance difference values by calculation; determining the number of sets corresponding to the ratios in different numerical ranges; and based on the ratios of the different numerical ranges and the numbers of sets corresponding to the ratios of the different numerical ranges, acquiring a normal distribution curve by fitting, and acquiring the error correction model by constructing based on the normal distribution curve.

5. The unmanned drayage truck alignment method according to claim 3, wherein the step of adjusting the position of the unmanned drayage truck based on the alignment information comprises the following steps:

determining a target driving direction and a target driving distance of the unmanned drayage truck based on the second distance difference; determining a target rotation direction and a target rotation angle of the unmanned drayage truck based on the attitude angle value; and controlling the unmanned drayage truck to rotate the target rotation angle along the target rotation direction, and to travel the target driving distance along the target driving direction.

6. The unmanned drayage truck alignment method according to claim 1, wherein before the step of adjusting the position of the unmanned drayage truck based on the alignment information, it further comprises the following steps:

acquiring three-dimensional point cloud information of an obstacle; determining whether the unmanned drayage truck will collide with the obstacle based on an adjustment trajectory of the unmanned drayage truck; and if a collision occurs, pausing the adjustment of the position of the unmanned drayage truck, and waiting on a spot or avoiding the obstacle.

7. An unmanned drayage truck alignment apparatus, comprising:

an alignment module, which is configured to control an unmanned drayage truck to perform alignment based on positioning information of a target position; an acquisition module, which is configured to acquire alignment information of the unmanned drayage truck; a determination module, which is configured to determine whether the unmanned drayage truck is successfully aligned based on the alignment information of the unmanned drayage truck; a prompt module, which is configured to output prompt information if the alignment is successful so as to prompt port machinery equipment to perform container loading/unloading operation; and an adjustment module, which is configured to adjust the position of the unmanned drayage truck based on the alignment information if the alignment is not successful, and return to the step of acquiring alignment information of the unmanned drayage truck.

8. The unmanned drayage truck alignment apparatus according to claim 7, wherein the unmanned drayage truck alignment apparatus further comprises a computing module, which is configured to:

acquire an image of an unmanned drayage truck collected by a camera on the port machinery equipment;

acquire a front of the unmanned drayage truck and four sides of a limiting subframe by identifying based on the image;

mark four vertex coordinates corresponding to the four sides of the limiting subframe in an image coordinate system, and convert the four vertex coordinates into four corresponding target coordinates in a world coordinate system based on a SLAM algorithm;

determine a first distance difference between the unmanned drayage truck and the target position based on the four target coordinates; and

acquire an attitude angle value of the unmanned drayage truck relative to the target position by calculation based on the two target coordinates corresponding to the front of the unmanned drayage truck in the four target coordinates.

9. An unmanned drayage truck alignment device, comprising: a processor, a memory, and an unmanned drayage truck alignment program stored on the memory and executable by the processor, wherein when the unmanned drayage truck alignment program is executed by the processor, the steps of the unmanned drayage truck alignment method according to any one of claims 1 to 6 are realized.

10. A readable storage medium, comprising: an unmanned drayage truck alignment program, which is stored on the readable storage medium, wherein when the unmanned drayage truck alignment program is executed by a processor, the steps of the unmanned drayage truck alignment method according to any one of claims 1 to 6 are realized.

1005

1001

Processor

1002

1003    1004

User Interface

Network Interface

| Operating System |
| Network Communication Module |
| User Interface Module |
| Unmanned Drayage Truck Alignment Program |

Memory

Fig. 1

| controlling an unmanned drayage truck to perform alignment based on positioning information of a target position | S10 |

| acquiring alignment information of the unmanned drayage truck | S20 |

| determining whether the unmanned drayage truck is successfully aligned based on the alignment information of the unmanned drayage truck | S30 |

| if not, adjusting the position of the unmanned drayage truck based on the alignment information, and returning to the step of acquiring alignment information of the unmanned drayage truck | S50 |

| if yes, outputting prompt information to prompt port machinery equipment to perform container loading/ unloading operation | S40 |

Fig. 2

acquiring an image of the unmanned drayage truck collected by a camera on the port machinery equipment — S60

acquiring a front of the unmanned drayage truck and four sides of a limiting subframe by identifying based on the image — S70

marking four vertex coordinates corresponding to the four sides of the limiting subframe in an image coordinate system, and converting the four vertex coordinates into four corresponding target coordinates in a world coordinate system based on a SLAM algorithm — S80

determining a first distance difference between the unmanned drayage truck and the target position based on the four target coordinates — S90

acquiring an attitude angle value of the unmanned drayage truck relative to the target position by calculation based on the two target coordinates corresponding to the front of the unmanned drayage truck in the four target coordinates — S100

Fig. 3

determining a target driving direction and a target driving distance of the unmanned drayage truck based on the second distance difference — S501

determining a target rotation direction and a target rotation angle of the unmanned drayage truck based on the attitude angle value — S502

controlling the unmanned drayage truck to rotate the target rotation angle along the target rotation direction, and to travel the target driving distance along the target driving direction — S503

Fig. 4

Unmanned Drayage Truck
Alignment Apparatus

Alignment Module — 10

Acquisition Module — 20

Determination Module — 30

Prompt Module — 40

Adjustment Module — 50

Fig. 5

## INTERNATIONAL SEARCH REPORT

| | | | International application No. |
| | | | **PCT/CN2023/123470** |

**A. CLASSIFICATION OF SUBJECT MATTER**

G01C21/00(2006.01)i; G06T7/70(2017.01)n

According to International Patent Classification (IPC) or to both national classification and IPC

**B. FIELDS SEARCHED**

Minimum documentation searched (classification system followed by classification symbols)

IPC: G01C21/-; G06T7/-

Documentation searched other than minimum documentation to the extent that such documents are included in the fields searched

Electronic data base consulted during the international search (name of data base and, where practicable, search terms used)

CNABS, CNTXT, ENTXTC, VEN: 东风, 闫名慧, 刘劲松, 杨春, 余文艳, 孙权, 集卡, 卡车, 对齐, 对位, 对准, 对位系统, 停车, 摄像, 视觉, 相机, 图像, 拍摄, 调整, 距离, 定位, 位置, 位姿, 姿态, 坐标, 方向, 角, 角度, 边, 测量, 测试, 探测, 车架, 限位副车架, 车头, 地图, 点云, 顶点, 端点, 范围, 模型, 碰撞, 三维, 三维点云, 障碍, 正态分布, 正态分布曲线, container truck?, truck?, park+, stop+, align+, iCPS, SLAM, vision, visual, camera?, imag+, unload+, load+, dispatch+, "3D"

**C. DOCUMENTS CONSIDERED TO BE RELEVANT**

| Category* | Citation of document, with indication, where appropriate, of the relevant passages | Relevant to claim No. |
|---|---|---|
| PX | CN 115773745 A (DONGFENG COMMERCIAL VEHICLE CO., LTD.) 10 March 2023 (2023-03-10)<br>claims 1-10, and description, paragraphs 0001-0156, and figures 1-5 | 1-10 |
| X | CN 112528721 A (FUJIAN ELECTRONIC PORT CO., LTD.) 19 March 2021 (2021-03-19)<br>description, paragraphs 0051-0079 | 1, 6-7, 9-10 |
| X | CN 112150540 A (CHINA WATERBORNE TRANSPORT RESEARCH INSTITUTE) 29 December 2020 (2020-12-29)<br>description, paragraphs 0007-0026 and 0104-0107 | 1, 6-7, 9-10 |
| X | WO 2022133636 A1 (SHENZHEN DEEPROUTE.AI CO., LTD.) 30 June 2022 (2022-06-30)<br>description, paragraphs 0094-0100 and 0119 | 1, 6-7, 9-10 |
| Y | CN 112528721 A (FUJIAN ELECTRONIC PORT CO., LTD.) 19 March 2021 (2021-03-19)<br>description, paragraphs 0051-0079 | 2-5, 8 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 November 2023** | **27 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/123470** |

**C.    DOCUMENTS CONSIDERED TO BE RELEVANT**

| Category* | Citation of document, with indication, where appropriate, of the relevant passages | Relevant to claim No. |
|---|---|---|
| Y | CN 115180512 A (HUNAN YANGMA INFORMATION CO., LTD.) 14 October 2022 (2022-10-14) description, paragraphs 0009 and 0067 | 2-5, 8 |
| A | CN 114299146 A (BEIJING WANJI TECHNOLOGY CO., LTD.) 08 April 2022 (2022-04-08) entire document | 1-10 |

## INTERNATIONAL SEARCH REPORT
### Information on patent family members

International application No.

**PCT/CN2023/123470**

| Patent document cited in search report | | | Publication date (day/month/year) | Patent family member(s) | | | Publication date (day/month/year) |
|---|---|---|---|---|---|---|---|
| CN | 115773745 | A | 10 March 2023 | None | | | |
| CN | 112528721 | A | 19 March 2021 | CN | 112528721 | B | 06 June 2023 |
| CN | 112150540 | A | 29 December 2020 | CN | 112150540 | B | 25 August 2023 |
| WO | 2022133636 | A1 | 30 June 2022 | CN | 115867875 | A | 28 March 2023 |
| CN | 115180512 | A | 14 October 2022 | CN | 115180512 | B | 20 January 2023 |
| CN | 114299146 | A | 08 April 2022 | None | | | |

Form PCT/ISA/210 (patent family annex) (July 2022)